# FASCICULE DE BREVET EUROPEEN

(11) **EP 2 832 093 B1**
(45) Date de publication et mention de la délivrance du brevet: **29.05.2024**
(21) Numéro de dépôt: 13715270.8
(22) Date de dépôt: 06.03.2013
(51) Int. Cl.: H04N 19/13, H04N 19/167, H04N 19/174, H04N 19/196, H04N 19/423

(54) **PROCEDE ET DISPOSITIF DE CODAGE ET DECODAGE D'IMAGES**
VERFAHREN UND VORRICHTUNG ZUR CODIERUNG UND DECODIERUNG VON BILDERN
METHOD AND DEVICE FOR CODING AND DECODING IMAGES

(30) Priorité: 29.03.2012 FR 1252826
(43) Date de publication de la demande: 04.02.2015
(73) Titulaire: Orange, 92130 Issy-les-Moulineaux (FR)
(72) Inventeur: HENRY, Felix, F-35760 Saint Gregoire (FR); PATEUX, Stéphane, F-35700 Rennes (FR); CLARE, Gordon, F-35740 Pace (FR)
(86) Numéro de dépôt international: PCT/FR2013/050474
(87) Numéro de publication internationale: WO 2013/144474

(56) Documents cités:
- EP-A1- 1 422 828
- C-W HSU ET AL: "AHG4: Low latency CABAC initialization for dependent tiles", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-G197, 7 novembre 2011 (2011-11-07), XP030110181,
- WAN W ET AL: "Comments on specifying tile support in HEVC Profiles and Levels", 8. JCT-VC MEETING; 99. MPEG MEETING; 1-2-2012 - 10-2-2012; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-H0463, 21 janvier 2012 (2012-01-21), XP030111490,
- WAN W ET AL: "Implication of parallelized bitstreams on single core decoder architectures", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-G110, 7 novembre 2011 (2011-11-07), XP030110094,
- KIRAN MISRA ET AL: "Periodic initialization for wavefront coding functionality", 95. MPEG MEETING; 24-1-2011 - 28-1-2011; DAEGU; (MOTION PICTURE EXPERT GROUP OR ISO/IEC JTC1/SC29/WG11),, no. JCTVC-D073, 22 janvier 2011 (2011-01-22), XP030047392,
- C-W HSU ET AL: "AHG4: Wavefront tile parallel processing", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-G199, 7 novembre 2011 (2011-11-07), XP030110183,
- GORDON C ET AL: "Wavefront Parallel Processing for HEVC Encoding and Decoding", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F274, 1 January 2011 (2011-01-01), XP030009297,
- CLARE (ORANGE-FTGROUP) G ET AL: "Wavefront and Cabac Flush: Different Degrees of Parallelism Without Transcoding", 6. JCT-VC MEETING; 20110714 - 20110722; TORINO; (JOINT COLLABORATIVE TEAM ON VIDEO CODING OF ISO/IEC JTC1/SC29/WG11 AND ITU-T SG.16 ), , no. JCTVC-F275 15 July 2011 (2011-07-15), XP030228750, Retrieved from the Internet: URL:http://phenix.int-evry.fr/jct/doc_end_ user/documents/6_Torino/wg11/JCTVC-F275-v3 .zip JCTVC-F275.doc [retrieved on 2011-07-15]
- BROSS B ET AL: "High Efficiency Video Coding (HEVC) text specification Working Draft 5", 7. JCT-VC MEETING; 20111121 - 20111130; GENEVA; (JOINT COLLABORATIVE TEAM ON VIDEO CODING OF ISO/IEC JTC1/SC29/WG11 AND ITU-T SG.16 ), , no. JCTVC-G1103 25 January 2012 (2012-01-25), XP030231522, Retrieved from the Internet: URL:http://phenix.int-evry.fr/jct/doc_end_ user/documents/7_Geneva/wg11/JCTVC-G1103-v 10.zip JCTVC-G1103_d7.doc [retrieved on 2012-01-25]

## Description

### Domaine de l'invention

La présente invention se rapporte de manière générale au domaine du traitement d'images, et plus précisément au codage et au décodage d'images numériques et de séquences d'images numériques.

L'invention peut ainsi notamment s'appliquer au codage vidéo mis en oeuvre dans les codeurs vidéo actuels (MPEG, H.264, etc) ou à venir (ITU-T/VCEG (HEVC) ou ISO/MPEG (HVC).

### Arrière-plan de l'invention

La norme HEVC actuellement en cours d'élaboration et décrite dans le document « Joint Collaborative Team on Vidéo Coding (JCT-VC) of ITU-T SG16 WP3 and ISO/IEC JTC1/SC29/WG11 7th Meeting: Geneva, CH, 21-30 November, 2011 » est similaire à la norme précédente H.264, en ce sens qu'elle utilise une représentation par blocs de la séquence vidéo. La norme HEVC se distingue toutefois de la norme H.264 par le fait qu'elle met en oeuvre une subdivision de l'image en une pluralité de partitions de blocs appelées « tuiles » (traduction anglaise de « tiles »), telle que décrite dans le document « Joint Collaborative Team on Video Coding (JCT-VC) of ITU-T SG16 WP3 and ISO/IEC JTC1/SC29/WG11, 6th Meeting: Torino, IT, 14-22July, 2011 ».

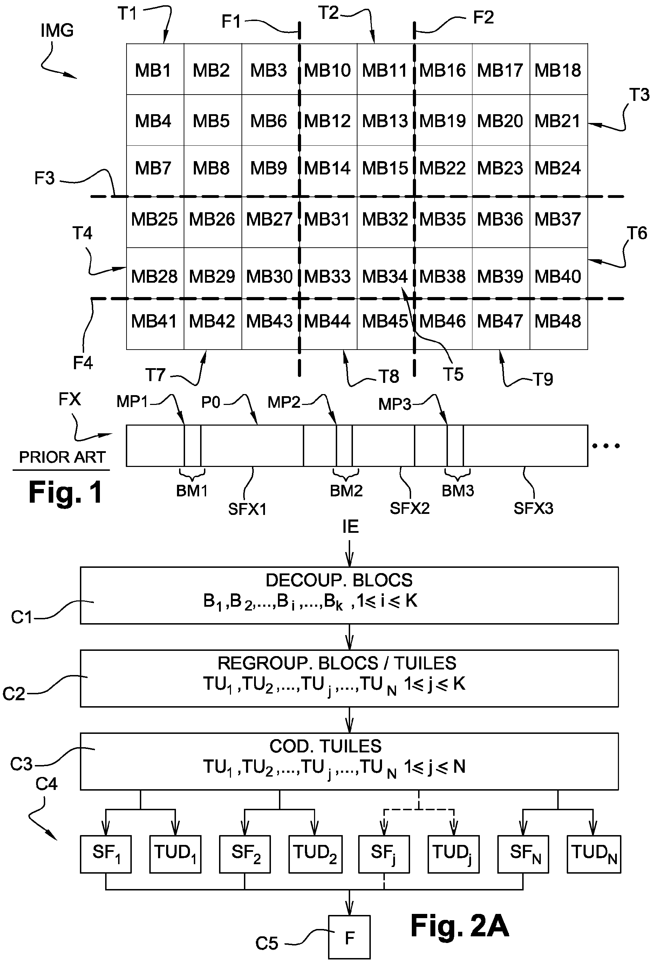

Plus précisément, une telle subdivision consiste à partitionner chaque image de la vidéo à l'aide d'une ou de plusieurs frontières verticales s'étendant du haut vers le bas de l'image et d'une ou de plusieurs frontières horizontales s'étendant d'un côté (ex : côté gauche) à l'autre (ex : côté droit) de l'image. Les macroblocs se trouvant entre deux frontières verticales consécutives et deux frontières horizontales consécutives forment une tuile dans laquelle sont ainsi regroupés des macroblocs voisins deux à deux. A l'intérieur d'une tuile, les macroblocs sont codés puis décodés selon un ordre lexicographique, c'est-à-dire selon un parcours ligne par ligne des blocs, de type « raster-scan », en partant du bloc situé en haut à gauche de la tuile jusqu'au bloc situé en bas à droite de la tuile. Les tuiles sont elles-mêmes codées puis décodées dans leur ordre lexicographique. La **figure 1** présente un exemple de subdivision d'une image IMG en un nombre prédéterminé de tuiles, par exemple neuf tuiles T1 à T9. Dans l'exemple représenté :
- la tuile T1 comprend les macroblocs MB1 à MB9,
- la tuile T2 comprend les macroblocs MB10 à MB15,
- la tuile T3 comprend les macroblocs MB16 à MB24,
- la tuile T4 comprend les macroblocs MB25 à MB30,
- la tuile T5 comprend les macroblocs MB31 à MB34,
- la tuile T6 comprend les macroblocs MB35 à MB40,
- la tuile T7 comprend les macroblocs MB41 à MB43,
- la tuile T8 comprend les macroblocs MB44 à MB45,
- la tuile T9 comprend les macroblocs MB46 à MB48.

L'ensemble des tuiles T1, T4 et T7 est séparé de l'ensemble de tuiles T2, T5 et T8 par une frontière verticale F1.

L'ensemble des tuiles T2, T5 et T8 est séparé de l'ensemble de tuiles T3, T6 et T9 par une frontière verticale F2.

L'ensemble des tuiles T1, T2 et T3 est séparé de l'ensemble de tuiles T4, T5 et T6 par une frontière horizontale F3.

L'ensemble des tuiles T4, T5 et T6 est séparé de l'ensemble de tuiles T7, T8 et T9 par une frontière horizontale F4.

Le nombre et la taille des tuiles sont paramétrables, image par image. Les macroblocs sont numérotés dans l'ordre (« raster scan ») où ils sont traités dans une tuile considérée, comme expliqué précédemment.

L'intérêt d'une telle subdivision en tuiles est que la prédiction Intra ou Inter d'un macrobloc d'une tuile considérée, par exemple le macrobloc MB10 de la tuile T2, par rapport à un macrobloc déjà codé puis décodé appartenant à une tuile différente de la tuile T2, par exemple le macrobloc MB3 de la tuile T1, n'est pas autorisée. En conséquence, chaque tuile peut-être encodée puis décodée indépendamment, ce qui permet un encodage et/ou un décodage en parallèle de ces tuiles sur des unités de traitement différentes, chaque unité traitant une tuile.

Comme dans la norme H.264, la norme HEVC précitée propose que pour chaque macrobloc considéré au codage, peut être codé un macrobloc résiduel correspondant au macrobloc original diminué d'une prédiction. Un tel macrobloc résiduel contient des coefficients qui sont quantifiés après une éventuelle transformation, puis codés par un codeur entropique.

On s'intéresse ici plus particulièrement au codeur entropique. Le codeur entropique encode les informations suivant leur ordre d'arrivée. Typiquement un parcours ligne par ligne des blocs est réalisé, de type « raster-scan », en partant du bloc en haut à gauche de l'image. Pour chaque bloc, les différentes informations nécessaires à la représentation du bloc (type de bloc, mode de prédiction, coefficients de résidu, ...) sont envoyées séquentiellement au codeur entropique.

On connaît déjà un codeur arithmétique efficace et de complexité raisonnable, appelé « CABAC » ("Context Adaptive Binary Arithmetic Coder" en anglais), introduit dans le standard de compression AVC (aussi connu sous le nom de ISO-MPEG4 partie 10 et ITU-T H.264).

Ce codeur entropique met en oeuvre différents concepts :
- le codage arithmétique de symbole basé sur l'utilisation d'une probabilité d'apparition de ce symbole ;
- l'adaptation au contexte : il s'agit ici d'adapter la probabilité d'apparition des symboles à coder. D'une part, un apprentissage à la volée est réalisé. D'autre part, suivant l'état des informations préalablement codées, un contexte spécifique est utilisé pour le codage. A chaque contexte correspond une probabilité d'apparition propre du symbole. Par exemple un contexte correspond à un type de symbole codé (la représentation d'un coefficient d'un résidu, signalisation de mode de codage, ...) suivant une configuration donnée, ou un état du voisinage (par exemple le nombre de modes « intra » sélectionnés dans le voisinage, ...) ;
- la binarisation : une mise sous la forme d'une suite de bits des symboles à coder est réalisée. Par la suite, ces différents bits sont envoyés successivement au codeur entropique binaire.

Ainsi, ce codeur entropique met en oeuvre, pour chaque contexte utilisé, un système d'apprentissage des probabilités à la volée par rapport aux symboles précédemment codés pour le contexte considéré. Cet apprentissage est basé sur l'ordre de codage de ces symboles. Lorsque le codage entropique d'un macrobloc courant commence, les probabilités d'apparition de symboles utilisées sont celles obtenues après codage d'un macrobloc précédemment codé puis décodé, qui est celui qui précède immédiatement le bloc courant conformément au parcours des blocs.

Un tel codeur entropique a pour inconvénient que le codage et le décodage d'un symbole sont dépendants de l'état de la probabilité apprise jusque-là, le décodage des symboles ne pouvant alors se faire que dans le même ordre que celui utilisé lors du codage.

Dans la future norme HEVC, le codage entropique est effectué tuile par tuile dans l'ordre « raster san » de ces dernières, plutôt que ligne par ligne.

Ainsi, dans l'exemple représenté sur la **figure 1**, le codage entropique CABAC est appliqué successivement aux macroblocs MB1 à MB9 de la tuile T1, aux macroblocs MB10 à MB15 de la tuile T2, aux macroblocs MB16 à MB24 de la tuile T3, aux macroblocs MB25 à MB30 de la tuile T4, aux macroblocs MB31 à MB34 de la tuile T5, aux macroblocs MB35 à MB40 de la tuile T6, aux macroblocs MB41 à MB43 de la tuile T7, aux macroblocs MB44 à MB45 de la tuile T8 et enfin aux macroblocs MB46 à MB48 de la tuile T9.

On constate qu'il pourrait toutefois être intéressant de décoder une image qui a été codée en ayant été subdivisée préalablement en tuiles, en conservant l'ordre « raster scan » des lignes de l'image comme proposé dans la norme H.264, plutôt que d'utiliser l'ordre « raster scan » des tuiles. Une telle disposition présente en effet un intérêt dans le but de délivrer des lignes de macroblocs de pixels qui sont adaptées à être affichées sur des écrans de visualisation fonctionnant généralement selon un balayage horizontal des lignes de pixels.

Considérons le cas de l'image IMG subdivisée en tuiles telle que représentée sur la **figure 1**. Comme expliqué précédemment, dans la norme HEVC en cours d'élaboration, les macroblocs sont codés dans l'ordre raster scan de chaque tuile T1 à T9. Le codage de chacune de ces tuiles génère un sous-flux binaire correspondant SFX1, SFX2,..., SFX9, chaque sous-flux étant disposé dans un flux compressé final FX, dans l'ordre où la tuile associée est traitée. Pour des raisons de simplification, seuls les trois premiers sous-flux SFX1, SFX2, SFX3 sont représentés sur la **figure 1**. Chaque sous-flux est ensuite décodé successivement dans l'ordre où il apparaît dans le flux FX.

Toutefois, pour les raisons mentionnées ci-dessus, il peut être souhaitable de décoder l'image IMG conformément à la norme H.264, c'est-à-dire ligne de macroblocs par ligne de macroblocs dans l'image IMG, dans l'ordre suivant : MB1, MB2, MB3, MB10, MB11, MB16, MB17, MB18, MB4, MB5, MB6, MB12, MB13, MB19, MB20, MB21 et ainsi de suite jusqu'au macrobloc MB48.

Les macroblocs de l'image IMG étant décodés dans l'ordre défini par les tuiles, pour afficher la première ligne de macroblocs MB1, MB2, MB3, MB10, MB11, MB16, MB17, MB18, il faut donc décoder tous les macroblocs MB1 à MB9 du sous-flux SFX1 avant de pouvoir commencer à décoder les macroblocs MB10 et MB11 du sous-flux SFX2. De même, il faudrait décoder tous les macroblocs MB10 à MB15 du sous-flux SFX2 avant de pouvoir commencer à décoder les macroblocs MB16, MB17 et MB18 du sous-flux SFX3. Ainsi, uniquement pour le décodage de la première ligne de macroblocs de l'image, une telle disposition introduit un retard important au décodage de ladite première ligne et nécessite de conserver en mémoire tous les pixels décodés relatifs aux macroblocs MB1 à MB9 de la tuile T1, aux macroblocs MB10 à MB15 de la tuile T2, aux macroblocs MB16 à MB24 de la tuile T3, ce qui est consommateur de mémoire. En conséquence, il est souhaitable :
- de décoder uniquement les macroblocs MB1, MB2, MB3, MB10, MB11, MB16, MB17, MB18 pour afficher la première ligne de macroblocs,
- de décoder uniquement les macroblocs MB4, MB5, MB6, MB12, MB13, MB19, MB20, MB21 pour afficher la deuxième ligne de macroblocs,
- et ainsi de suite pour les lignes de macroblocs suivantes de l'image IMG.

Considérons à cet effet le cas du décodage de la première ligne de macroblocs de l'image IMG. Un pointeur de flux PO parcourt le sous-flux SFX1 de façon à lire les données permettant de décoder les macroblocs MB1, MB2, MB3. Compte tenu du fait que le décodeur entropique CABAC procède à une mutualisation des bits entre macroblocs consécutifs, lorsque le pointeur PO a parcouru suffisamment de bits pour pouvoir décoder les données du macrobloc MB3, il aura aussi lu un certain nombre de bits nécessaires au décodage d'au moins le macrobloc suivant MB4, lesquels bits seront désignés par « bits mutualisés ». Le pointeur PO doit alors « sauter » vers le début du sous-flux SFX2 suivant pour décoder les données des macroblocs MB10 et MB11. Un tel saut est possible car chaque sous-flux possède une adresse de début qui est inscrite dans un en-tête du flux complet FX. Avant de faire ce saut, le décodeur doit :
- mémoriser la position du pointeur PO dans une mémoire de pointeurs MP1, de façon à pouvoir à nouveau ultérieurement parcourir le sous-flux SFX1 pour continuer la lecture des bits correspondant aux macroblocs MB4, MB5, MB6 de la deuxième ligne de l'image IMG,
- mémoriser les bits mutualisés dans une mémoire de bits BM1.

Le pointeur PO commence alors la lecture des bits du sous-flux SFX2 en vue de décoder les macroblocs MB10 et MB11. De façon similaire à ce qui a été décrit précédemment, le décodeur doit :
- mémoriser la position du pointeur PO dans une mémoire de pointeurs MP2, de façon à pouvoir parcourir à nouveau ultérieurement le sous-flux SFX2 pour continuer la lecture des bits correspondant aux macroblocs MB12 et MB13 de la deuxième ligne de l'image IMG,
- mémoriser les bits mutualisés dans une mémoire de bits BM2.

Une telle procédure se poursuit ainsi à chaque passage de frontière de tuile au cours du décodage de la première ligne de l'image IMG.

Lorsque le décodage de la première ligne de l'image IMG est terminé, il est procédé au décodage de la deuxième ligne de cette image. Le pointeur PO est alors mis à la valeur telle que mémorisée préalablement dans la mémoire MP1, et les bits mutualisés qui sont contenus dans la mémoire BM1 sont transférés dans la mémoire courante du décodeur CABAC. Ainsi, le décodage du macrobloc MB4 peut commencer. Cette procédure est également mise en oeuvre pour le décodage des macroblocs MB12 et MB13 du sous-flux SFX2 et des macroblocs MB19, MB20 et MB21 du sous-flux SFX3.

Puis le décodage des lignes suivantes de l'image IMG est poursuivi conformément à la procédure qui vient d'être décrite.

Le procédé de décodage selon cette procédure n'est pas performant et lourd à mettre en oeuvre compte tenu des multiples opérations qu'il doit effectuer et du grand nombre d'informations qu'il doit traiter et stocker. Il en résulte un procédé de décodage dont le temps traitement est trop long et qui consomme trop de ressources mémoire.

### Objet et résumé de l'invention

Un des buts de l'invention est de remédier à des inconvénients de l'état de la technique précité.

A cet effet, un objet de la présente invention concerne un procédé de décodage d'au moins une image tel que défini dans la revendication 1 annexée.

Selon un premier exemple, les variables d'état du module de décodage entropique sont les deux bornes d'un intervalle représentatif de la probabilité d'apparition d'un symbole parmi les symboles de l'ensemble prédéterminé de symboles.

Selon un deuxième exemple, les variables d'état du module de décodage entropique sont une borne et la longueur d'un intervalle représentatif de la probabilité d'apparition d'un symbole parmi les symboles de l'ensemble prédéterminé de symboles.

Selon un troisième exemple, les variables d'état du module de décodage entropique sont les chaines de symboles contenues dans la table de traduction d'un codeur entropique LZW (Lempel-Ziv-Welch) bien connu de l'homme de l'art, et décrit à l'adresse internet suivante à la date du 29 mars 2012: http://en.wikipedia.org/wiki/Lempel%E2%80%93Ziv%E2%80%93Welch.

Une telle disposition permet de décoder le flux préalablement codé de telle sorte que les blocs de ce flux soient décodés les uns à la suite des autres dans l'ordre »raster scan » où ils sont disposés dans l'image et non pas d'un sous-flux au sous-flux suivant, dans l'ordre « raster scan » où ils sont disposés par tuile.

Cette disposition présente un intérêt particulier dans le cas où un affichage de l'image ligne de blocs par ligne de blocs, dans l'ordre « raster scan » des blocs de l'image, est souhaité, notamment dans le cadre de l'affichage de l'image sur un écran de visualisation fonctionnant généralement selon un balayage horizontal des lignes de pixels.

En outre, grâce au fait que le module de décodage entropique est réinitialisé à chaque fois qu'un bloc décodé longe une frontière entre la tuile en cours de décodage et la tuile qui la suit dans l'ordre « raster scan », il n'est pas nécessaire, en vue de reprendre le décodage de la deuxième ligne de blocs de ladite tuile, une fois décodés les blocs de la première ligne de la tuile suivante :
- de mémoriser au préalable les bits qui ont été mutualisés au cours du décodage de la première ligne de blocs de ladite tuile (respectivement au cours du décodage de la première ligne de blocs de ladite tuile suivante), en vue de servir au décodage des blocs qui suivent le dernier bloc de la première ligne de ladite tuile dans l'ordre « raster scan » (respectivement au décodage des blocs qui suivent le dernier bloc de la première ligne de ladite tuile suivante dans l'ordre « raster scan »),
- de transférer les bits mutualisés dans la mémoire courante du décodeur entropique lors de la reprise du codage de la deuxième ligne de blocs de la tuile (respectivement lors de la reprise du codage de la deuxième ligne de blocs de la tuile suivante).

Il en résulte un procédé de décodage qui est moins coûteux en calculs et dont l'exécution est plus rapide.

Corrélativement, l'invention concerne un dispositif de décodage d'un flux représentatif d'au moins une image codée,tel que défini dans la revendication 2 annexée.

L'invention vise également un programme d'ordinateur comportant des instructions pour l'exécution des étapes du procédé de décodage ci-dessus, lorsque le programme est exécuté par un ordinateur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'enregistrement lisible par un ordinateur, et comportant des instructions de programme d'ordinateur tel que mentionné ci-dessus.

Le support d'enregistrement peut être n'importe quelle entité ou dispositif capable de stocker le programme. Par exemple, un tel support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un tel support d'enregistrement peut être un circuit intégré dans lequel le programme est incorporé, le circuit étant adapté pour exécuter le procédé en question ou pour être utilisé dans l'exécution de ce dernier.

Le dispositif de décodage et le programme d'ordinateur précités présentent au moins les mêmes avantages que ceux conférés par le procédé de décodage selon la présente invention.

### Brève description des dessins

D'autres caractéristiques et avantages apparaîtront à la lecture de modes de réalisation préférés décrits en référence aux figures annexées dans lesquelles les aspects relatifs au codage ne relèvent pas de l'invention et ne sont présents qu'à titre illustratif, et dans lesquelles :
- la figure 1 représente un schéma de codage d'image de l'art antérieur,
- la figure 2A représente les principales étapes du procédé de codage selon un exemple,
- la figure 2B représente en détail le codage mis en oeuvre dans le procédé de codage de la figure 2A,
- la figure 3 représente un exemple de réalisation d'un dispositif de codage,
- figure 4 représente un schéma de codage/décodage d'image selon un mode de réalisation préférentiel,
- la figure 5A représente les principales étapes du procédé de décodage selon l'invention,
- la figure 5B représente en détail le décodage mis en oeuvre dans le procédé de décodage de la figure 5A,
- la figure 6 représente un mode de réalisation d'un dispositif de décodage selon l'invention.

### Description détaillée d'un premier exemple de réalisation de la partie codage

Un exemple de réalisation va maintenant être décrit, dans lequel le procédé de codage est utilisé pour coder une séquence d'images selon un flux binaire proche de celui qu'on obtient par un codage selon la norme H.264/MPEG-4 AVC. Dans cet exemple de réalisation, le procédé de codage est par exemple implémenté de manière logicielle ou matérielle par modifications d'un codeur initialement conforme à la norme H.264/MPEG-4 AVC. Le procédé de codage est représenté sous la forme d'un algorithme comportant des étapes C1 à C5, représentées à la **figure 2A****.**

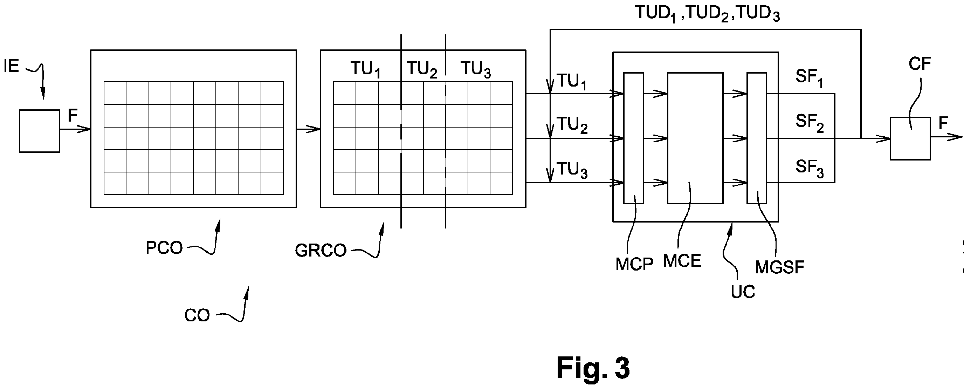

Selon l'exemple de réalisation, le procédé de codage est implémenté dans un dispositif de codage CO dont un exemple de réalisation est représenté sur la **figure 3****.**

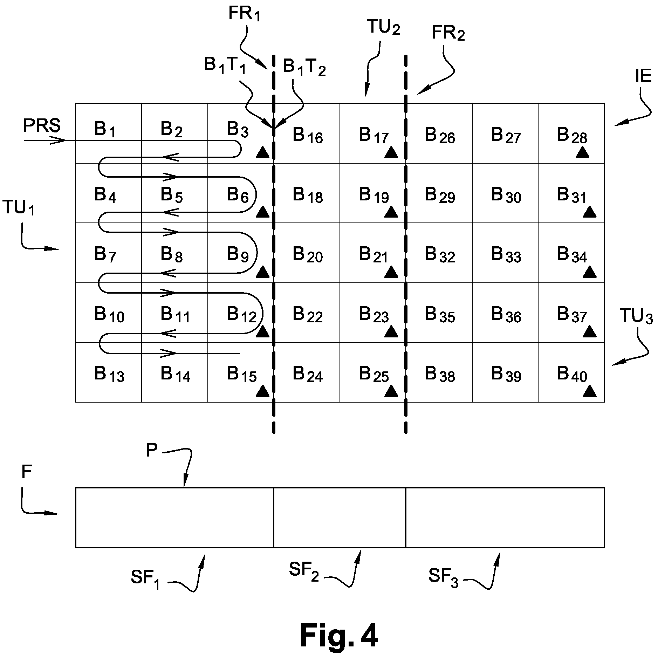

En référence à la **figure 2A****,** la première étape de codage C1 est le découpage d'une image IE d'une séquence d'images à coder en une pluralité de blocs B₁, B₂,...,Bᵢ, ...,B_{K}, avec 1≤i≤K, comme représenté sur la **figure 4****.** Dans l'exemple représenté, K=40. Un macrobloc est classiquement un bloc ayant une taille maximale prédéterminée. Un tel macrobloc peut par ailleurs être lui-même découpé en blocs plus petits. Dans un souci de simplification, le terme « bloc » sera donc utilisé indifféremment pour désigner un bloc ou un macrobloc. Lesdits blocs B₁, B₂,...,Bᵢ, ...,B_{K} sont aptes à contenir un ou plusieurs symboles, lesdits symboles faisant partie d'un ensemble prédéterminé de symboles. Dans l'exemple représenté, lesdits blocs ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de forme rectangulaire et/ou non alignés les uns avec les autres.

Un tel découpage est effectué par un module PCO de partitionnement représenté à la **figure 3** qui utilise par exemple un algorithme de partitionnement bien connu en tant que tel.

En référence à la **figure 2A****,** la deuxième étape de codage C2 est le regroupement des blocs précités voisins deux à deux en un nombre prédéterminé N de partitions de l'image appelées tuiles TU₁, TU₂,..., TUⱼ,..., TU_{N}, avec 1≤j≤N qui sont destinées à être codées séquentiellement dans l'ordre « raster scan », comme cela été expliqué plus haut dans la description de l'art antérieur. Dans l'exemple représenté sur la **figure 4****,** les blocs B₁ à B_{K} sont regroupés en N=3 tuiles TU₁, TU₂ TU₃. Dans un souci de simplification, la subdivision en tuiles est effectuée selon deux frontières uniquement verticales FR₁ et FR₂, et non pas horizontales. Il va bien sûr de soi que le procédé de codage s'applique aussi à la subdivision de l'image à la fois en frontières verticales et horizontales ou bien uniquement en frontières horizontales, selon les applications vidéo envisagées.

Les deux frontières verticales FR₁ et FR₂ délimitent dans l'image IE :
- la première tuile TU₁ contenant les blocs B₁ à B₁₅,
- la deuxième tuile TU₂ contenant les blocs B₁₆ à B₂₅
- la troisième tuile TU₃ contenant les blocs B₂₆ à B₄₀.

Un tel regroupement est effectué par un module de calcul GRCO représenté à la **figure 3**, à l'aide d'un algorithme bien connu en soi.

En référence à la **figure 2A****,** la troisième étape de codage C3 consiste dans le codage de chacune des tuiles de blocs TU₁, TU₂,..., TUⱼ,..., TU_{N}, selon un ordre de parcours « raster scan », les blocs d'une tuile TUⱼ considérée étant eux-mêmes codés selon un ordre de parcours « raster scan ». Dans l'exemple représenté sur la **figure 4****,** les tuiles TU₁, TU₂, TU₃ sont codées les unes après les autres, les blocs d'une tuile courante, par exemple la tuile TU₁, étant codés les uns après les autres, dans l'ordre « raster scan » comme indiqué par la flèche PRS. Dans un souci de clarté de la **figure 4****,** la flèche PRS n'est pas représentée sur les tuiles TU₂ et TU₃.

Un tel codage est par exemple de type séquentiel et est mis en oeuvre par une unité de codage UC qui code successivement dans l'ordre « raster scan » un nombre N de tuiles à coder, avec N=3 dans l'exemple représenté sur la **figure 3****.**

De façon connue en soi, l'unité de codage UC comprend :
- un module de codage prédictif d'un bloc courant par rapport à au moins un bloc précédemment codé puis décodé, notée MCP;
- un module de codage entropique dudit bloc courant par utilisation d'au moins une probabilité d'apparition de symbole calculée pour ledit bloc précédemment codé puis décodé, notée MCE.

Le module de codage prédictif MCP est un module qui est apte à effectuer un codage prédictif du bloc courant, selon les techniques de prédiction classiques, telles que par exemple en mode Intra et/ou Inter.

Le module de codage entropique MCE est quant à lui de type CABAC, mais modifié selon la présente invention comme cela sera décrit plus loin dans la description.

En particulier, les modifications apportées au module de codage entropique MCE se basent sur les enseignements du document: Thomas Wiegand, Gary J. Sullivan, Gisle Bjontegaard, and Ajay Luthra, "Overview of the H.264/AVC Video Coding Standard", IEEE Transactions on Circuits and Systems for Video Technology, Vol. 13, No. 7, pp. 560-576, July 2003. Dans ce document, il est précisé que le codeur entropique CABAC a pour particularité d'affecter un nombre non entier de bits à chaque symbole d'un alphabet courant à coder. Concrètement, le codeur CABAC attend d'avoir lu plusieurs symboles, puis affecte à cet ensemble de symboles lus un nombre prédéterminé de bits que le codeur inscrit dans le flux compressé à transmettre au décodeur. Une telle disposition permet ainsi de mutualiser les bits sur plusieurs symboles et de coder un symbole sur un nombre fractionnaire de bits, ce nombre reflétant une information qui est plus proche de l'information réellement transportée par un symbole. D'autres bits associés aux symboles lus ne sont pas transmis dans le flux compressé mais sont conservés dans l'attente d'être affectés à un ou plusieurs nouveaux symboles lus par le codeur CABAC permettant à nouveau de mutualiser ces autres bits. De façon connue en tant que telle, le codeur entropique procède, à un instant donné, à une « vidange » de ces bits non transmis. Autrement dit, audit instant donné, le codeur extrait les bits non encore transmis et les inscrit dans le flux compressé à destination du décodeur. Une telle vidange se produit par exemple à l'instant où le dernier symbole à coder a été lu, de façon à assurer que le flux compressé contienne bien tous les bits qui permettront au décodeur de décoder tous les symboles de l'alphabet. De façon plus générale, l'instant auquel est effectuée la vidange est déterminé en fonction des performances et des fonctionnalités propres à un codeur/décodeur donné.

En variante, le module de codage entropique MCE pourrait être un codeur de Huffman connu en tant que tel.

Dans l'exemple représenté sur la **figure 4****,** si la tuile courante à coder est par exemple la tuile TU₁, l'unité de codage UC code les blocs B₁, B₂, B₃ de la première ligne de la tuile TU₁, de gauche à droite. Lorsqu'elle parvient au dernier bloc B₃ de ladite première ligne, elle passe au premier bloc B₄ de la deuxième ligne de la tuile TU₁. Lorsqu'elle parvient au dernier bloc B₆ de ladite deuxième ligne, elle passe au premier bloc B₇ de la troisième ligne de la tuile TU₁ et ainsi de suite jusqu'à ce que le dernier bloc B₁₅ de la tuile TU₁ soit codé.

D'autres types de parcours que celui qui vient d'être décrit ci-dessus sont bien sûr possibles. En fonction des applications, l'unité de codage pourrait traiter non pas une succession de lignes, comme expliqué ci-dessus, mais une succession de colonnes. Il est également possible de parcourir les lignes ou colonnes dans un sens ou dans l'autre.

En référence à la **figure 2A****,** la quatrième étape de codage C4 est la production d'un nombre de N sous-flux de bits SF₁, SF₂,..., SFⱼ,..., SF_{N} représentant les blocs traités compressés respectivement par l'unité de codage UC précitée, ainsi qu'une version décodée des blocs traités de chaque tuile TUⱼ. Les blocs traités décodés de chacune desdites tuiles, notés TUD₁, TUD₂,..., TUDⱼ,..., TUD_{N}, sont susceptibles d'être réutilisés respectivement par l'unité de codage UC représentée sur la **figure 3****.**

En référence à la **figure 3**, l'étape de production d'un sous-flux courant SFⱼ est mise en oeuvre par un module logiciel MGSF de génération de flux qui est adapté à produire des flux de données, telles que des bits par exemple.

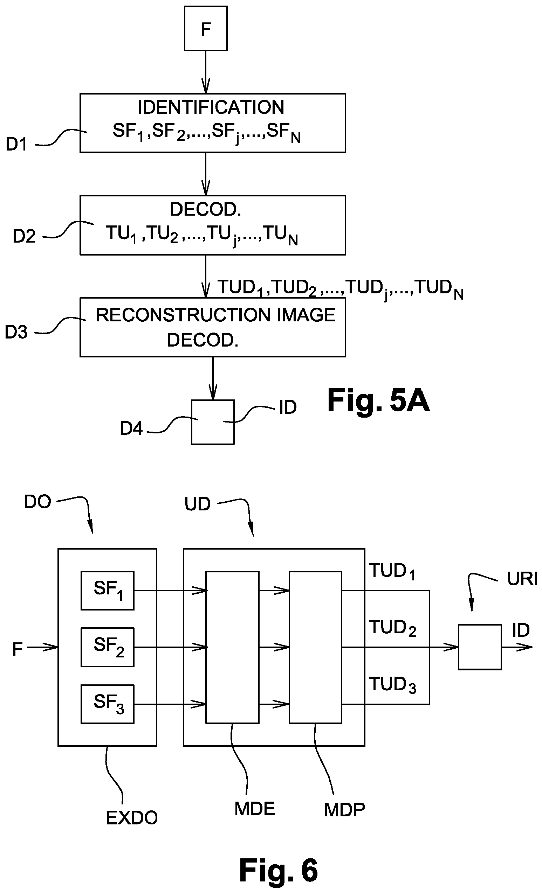

En référence à la **figure 2A****,** la cinquième étape de codage C5 consiste à construire un flux global F à partir des N sous-flux SF₁, SF₂,..., SFⱼ,..., SF_{N} précités. Selon un exemple de réalisation, les sous-flux SF₁, SF₂,..., SFⱼ,..., SF_{N} sont simplement juxtaposés dans l'ordre des tuiles comme représenté sur la **figure 4****,** avec une information additionnelle destinée à indiquer au décodeur l'emplacement de chaque sous-flux dans le flux global F. Ce dernier est ensuite transmis par un réseau de communication (non représenté), à un terminal distant. Celui-ci comporte le décodeur DO représenté à la **figure 6****.**

Une telle construction du flux global F est mise en oeuvre dans un module CF de construction de flux, tel que représenté sur la **figure 3****.**

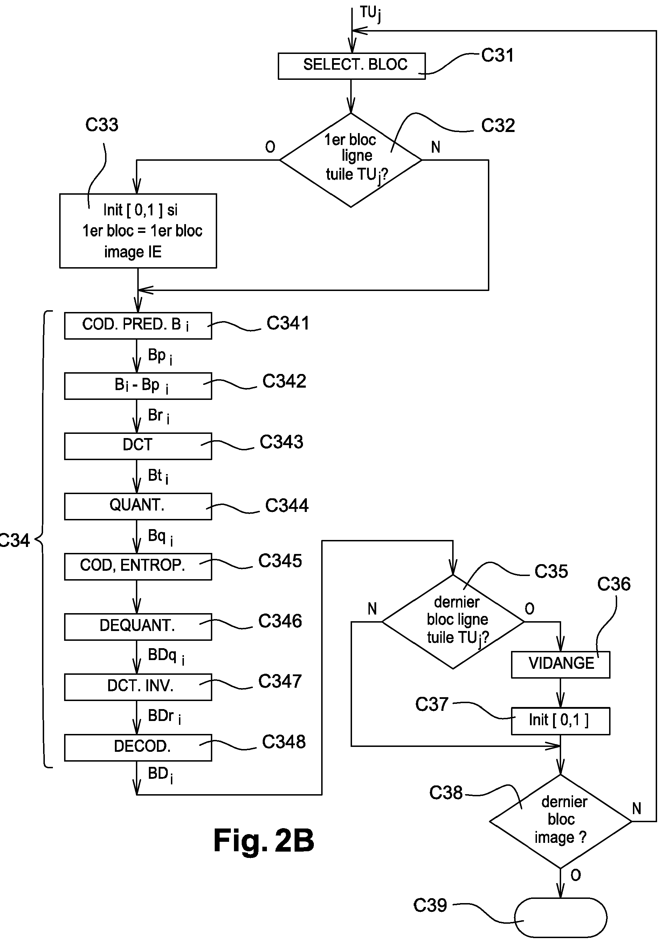

On va maintenant décrire, en référence à la **figure 2B**, les différentes sous-étapes spécifiques de l'invention, telles que mises en oeuvre lors de l'étape C3 de codage de tuiles précitée, dans l'unité de codage UC.

Au cours d'une étape C31, l'unité de codage UC sélectionne comme bloc courant le premier bloc à coder d'une tuile TUⱼ courante, telle que par exemple la première tuile TU₁ de l'image IE représentée à la **figure 4****.**

Au cours d'une étape C32, l'unité de codage UC teste si le bloc courant est le premier bloc (situé en haut et à gauche) d'une ligne de la tuile TU₁ qui a été obtenue à l'issue de l'étape C2 précitée.

Si tel est le cas, compte tenu du fait que le premier bloc B₁ est aussi le premier bloc de l'image IE, le module de codage entropique MCE procède, au cours d'une étape C33, à une initialisation de ses variables d'état. Selon l'exemple représenté, qui utilise le codage arithmétique décrit précédemment, il s'agit d'une initialisation d'un intervalle représentatif de la probabilité d'apparition d'un symbole contenu dans l'ensemble prédéterminé de symboles. De façon connue en tant que telle, cet intervalle est initialisé avec deux bornes L et H, respectivement inférieure et supérieure. La valeur de la borne inférieure L est fixée à 0, tandis que la valeur de la borne supérieure est fixée à 1, ce qui correspond à la probabilité d'apparition d'un premier symbole parmi tous les symboles de l'ensemble prédéterminé de symboles. La taille R de cet intervalle est donc définie à ce stade par R=H-L=1. L'intervalle initialisé est en outre partitionné classiquement en une pluralité de sous intervalles prédéterminés qui sont représentatifs respectivement des probabilités d'apparition des symboles de l'ensemble prédéterminé de symboles.

En variante, les variables internes initialisées sont une des deux bornes de l'intervalle précité et sa longueur.

Selon un autre exemple, si le codage entropique utilisé est le codage LZW, une table de traduction de chaînes de symboles est initialisée, de sorte qu'elle contienne une et une seule fois tous les symboles possibles.

Au cours d'une étape C34 qui fait suite à l'étape C33 précitée, il est procédé au codage du premier bloc courant B₁ de la première ligne de la tuile TU₁ représentée sur la **figure 4****.** Une telle étape C34 comprend une pluralité de sous-étapes C341 à C348 qui vont être décrites ci-dessous.

Au cours d'une première sous-étape C341, il est procédé au codage prédictif du bloc courant B₁ par des techniques connues de prédiction intra et/ou inter, au cours duquel le bloc B₁ est prédit par rapport à au moins un bloc précédemment codé puis décodé.

Il va de soi que d'autres modes de prédiction intra tels que proposés dans la norme H.264 sont possibles.

Le bloc courant B₁ peut être également soumis à un codage prédictif en mode inter, au cours duquel le bloc courant est prédit par rapport à un bloc issu d'une image précédemment codée et décodée. D'autres types de prédiction sont bien entendu envisageables. Parmi les prédictions possibles pour un bloc courant, la prédiction optimale est choisie selon un critère débit distorsion bien connu de l'homme du métier.

Ladite étape de codage prédictif précitée permet de construire un bloc prédit Bp₁ qui est une approximation du bloc courant B₁. Les informations relatives à ce codage prédictif seront ultérieurement inscrites dans le flux F transmis au décodeur DO. De telles informations comprennent notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter. Ces informations sont compressées par le codeur CO représenté à la **figure 3****.**

Au cours d'une sous-étape suivante C342, il est procédé à la soustraction du bloc prédit Bp₁ du bloc courant B₁ pour produire un bloc résidu Br₁.

Au cours d'une sous-étape suivante C343, il est procédé à la transformation du bloc résidu Br₁ selon une opération classique de transformation directe telle que par exemple une transformation en cosinus discrètes de type DCT, pour produire un bloc transformé Bt₁.

Au cours d'une sous-étape suivante C344, il est procédé à la quantification du bloc transformé Bt₁ selon une opération classique de quantification, telle que par exemple une quantification scalaire. Un bloc de coefficients quantifiés Bq₁ est alors obtenu.

Au cours d'une sous-étape suivante C345, il est procédé au codage entropique du bloc de coefficients quantifiés Bq₁. Dans le mode préféré de réalisation, il s'agit d'un codage entropique CABAC. Une telle étape consiste à :
- lire le ou les symboles de l'ensemble prédéterminé de symboles qui sont associés audit bloc courant,
- associer des informations numériques, telles que des bits, au(x) symbole(s) lu(s).

Dans l'exemple précité selon lequel le codage utilisé est un codage LZW, une information numérique correspondant au code du symbole dans la table de traduction courante est associée au symbole à coder, et une mise à jour de la table de traduction est effectuée, selon une méthode connue en soi.

Au cours d'une sous-étape suivante C346, il est procédé à la déquantification du bloc Bq₁ selon une opération classique de déquantification, qui est l'opération inverse de la quantification effectuée à l'étape C344. Un bloc de coefficients déquantifiés BDq₁ est alors obtenu.

Au cours d'une sous-étape suivante C347, il est procédé à la transformation inverse du bloc de coefficients déquantifiés BDq₁ qui est l'opération inverse de la transformation directe effectuée à l'étape C343 ci-dessus. Un bloc résidu décodé BDr₁ est alors obtenu.

Au cours d'une sous-étape suivante C348, il est procédé à la construction du bloc décodé BD₁ en ajoutant au bloc prédit Bp₁ le bloc résidu décodé BDr₁. Il est à noter que ce dernier bloc est le même que le bloc décodé obtenu à l'issue du procédé de décodage de l'image IE qui sera décrit plus loin dans la description. Le bloc décodé BD₁ est ainsi rendu disponible pour être utilisé par l'unité de codage UC.

A l'issue de l'étape de codage C34 précitée, le module de codage entropique MCE tel que représenté à la **figure 3** contient toutes les probabilités telles que progressivement remises à jour au fur et à mesure du codage du premier bloc. Ces probabilités correspondent aux différents éléments de syntaxe possibles et aux différents contextes de codage associés.

L'étape de codage C34 est par ailleurs directement mise en oeuvre si à l'issue de l'étape C32 précitée, le bloc courant n'est pas le premier bloc d'une ligne de la tuile TU₁.

Au cours d'une étape suivante C35, l'unité de codage UC teste si le bloc courant codé/décodé est le dernier bloc d'une ligne de la tuile TU₁. En référence à la **figure 4****,** une telle étape consiste à vérifier si le côté droit du bloc courant touche le bord de la frontière FR₁ qui est adjacent au bord de la frontière FR₂.

Si le bloc courant qui a été codé/décodé est le dernier bloc d'une ligne de la tuile TU₁, c'est à dire en référence à la **figure 4****,** si il est vérifié que le bloc courant B₃ a son côté droit qui longe le bord B₁T₁ de la tuile TU₁ qui forme une portion de la frontière FR₁ avec le bord B₁T₂ de la deuxième tuile TU₂, l'unité de codage UC de la **figure 3** effectue, au cours d'une étape suivante C36, une vidange comme évoqué plus haut dans la description. A cet effet, l'unité de codage UC transmet au module de génération de sous-flux MGSF la totalité des bits qui ont été associés au(x) symbole(s) lu(s) lors du codage de chaque bloc de la ligne de la tuile TU₁ considérée, de façon à ce que le module MGSF écrive ladite totalité de bits dans le sous-flux de données SF₁ représenté à la **figure 4** et qui contient un train binaire représentatif des blocs codés de ladite ligne. Une telle vidange est symbolisée sur la **figure 4** par un triangle à la fin de chaque ligne de tuile.

Au cours d'une étape C37, l'unité de codage UC effectue une étape identique à l'étape C33 précitée, c'est-à-dire initialise à nouveau l'intervalle représentatif de la probabilité d'apparition d'un symbole contenu dans l'ensemble prédéterminé de symboles.

L'intérêt d'effectuer les étapes C36 et C37 à ce niveau du codage est que lors du codage du bloc suivant traité par l'unité de codage UC, le codeur CO est dans un état initialisé. Ainsi, comme cela sera décrit plus loin dans la description, il devient possible pour une unité de décodage de décoder directement le flux compressé F à partir de ce point, puisqu'il lui suffit d'être dans l'état initialisé.

Au cours d'une étape suivante C38, l'unité de codage UC teste si le bloc courant qui vient d'être codé/décodé est le dernier bloc de l'image IE.

L'étape C38 est également mise en oeuvre dans le cas où le bloc courant qui a été traité à l'issue de l'étape C34 précitée n'est pas le dernier bloc d'une ligne de la tuile courante suite à l'étape de test C35.

Si le bloc courant est le dernier bloc de l'image IE, il est mis fin au procédé de codage au cours d'une étape C39.

Si tel n'est pas le cas, il est procédé à la sélection du bloc suivant à coder conformément à l'ordre de parcours « raster scan » dans la tuile TU₁ et les étapes C31 et suivantes sont réitérées. Dans l'exemple représenté sur la **figure 4****,** il s'agit du bloc B₂.

Le procédé de codage qui vient d'être décrit ci-dessus est mis en oeuvre pour toutes les lignes à coder d'une tuile considérée.

### Description détaillée d'un mode de réalisation de la partie décodage

Un mode de réalisation du procédé de décodage selon l'invention va maintenant être décrit, dans lequel le procédé de décodage est implémenté de manière logicielle ou matérielle par modifications d'un décodeur initialement conforme à la norme H.264/MPEG-4 AVC.

Le procédé de décodage selon l'invention est représenté sous la forme d'un algorithme comportant des étapes D1 à D4, représentées à la **figure 5A****.**

Selon le mode de réalisation de l'invention, le procédé de décodage selon l'invention est implémenté dans un dispositif de décodage DO représenté à la **figure 6****.**

En référence à la **figure 5A****,** la première étape de décodage D1 est l'identification dans ledit flux F des N sous-flux SF₁, SF₂,..., SFⱼ,..., SF_{N} contenant respectivement les N tuiles TU₁, TU₂,...,TUⱼ,..., TU_{N} de blocs B₁, B₂,...,Bᵢ, ...,B_{K}, avec 1≤i≤K qui ont été codés précédemment, comme représenté sur la **figure 4****.** A cet effet, chaque sous-flux SF₁, SF₂,..., SFⱼ,..., SF_{N} dans le flux F est associé à un indicateur destiné à permettre au décodeur DO de déterminer l'emplacement de chaque sous-flux dans le flux F.

Dans l'exemple représenté sur la **figure 4****,** lesdits blocs ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de forme rectangulaire et/ou non alignés les uns avec les autres.

Chaque bloc ou macrobloc peut par ailleurs être lui-même divisé en sous blocs qui sont eux-mêmes subdivisibles.

Une telle identification de sous-flux est effectuée par un module EXDO d'extraction de flux tel que représenté à la **figure 6****.**

En référence à la **figure 5A**, la deuxième étape de décodage D2 est le décodage de chacune desdites tuiles TU₁, TU₂,...,TUⱼ,..., TU_{N}, délivrant respectivement N tuiles de blocs décodées TUD₁, TUD₂,...,TUDⱼ,..., TUD_{N}

Le décodage des tuiles de blocs est mis en oeuvre par une seule unité de décodage UD telle que représentée sur la **figure 6****.**

Comme représenté plus en détail sur la **figure 6**, l'unité de codage UD comprend :
- un module de décodage entropique dudit bloc courant par apprentissage d'au moins une probabilité d'apparition de symbole calculée pour au moins un bloc précédemment décodé, notée MDE,
- un module de décodage prédictif d'un bloc courant par rapport audit bloc précédemment décodé, notée MDP.

Le module de décodage prédictif MDP est apte à effectuer un décodage prédictif du bloc courant, selon les techniques de prédiction classiques, telles que par exemple en mode Intra et/ou Inter.

Le module de décodage entropique MDE est quant à lui de type CABAC, mais modifié selon la présente invention comme cela sera décrit plus loin dans la description.

En variante, le module de décodage entropique MDE pourrait être un décodeur de Huffman connu en tant que tel.

Dans l'exemple représenté sur la **figure 4****,** si la tuile courante à décoder est par exemple la tuile TU₁, l'unité UD décode les blocs B₁, B₂, B₃ de la première ligne de la tuile TU₁, de gauche à droite. Lorsqu'elle parvient au dernier bloc B₃ de ladite première ligne, elle passe au premier bloc B₄ de la deuxième ligne de la tuile TU₁. Lorsqu'elle parvient au dernier bloc B₆ de ladite deuxième ligne, elle passe au premier bloc B₇ de la troisième ligne de la tuile TU₁ et ainsi de suite jusqu'à ce que le dernier bloc B₁₅ de la tuile TU₁ soit décodé.

D'autres types de parcours que celui qui vient d'être décrit ci-dessus sont bien sûr possibles. En fonction des applications, l'unité de décodage UD pourrait traiter non pas une succession de lignes, comme expliqué ci-dessus, mais une succession de colonnes. Il est également possible de parcourir les lignes ou colonnes dans un sens ou dans l'autre.

En référence à la **figure 5A**, la troisième étape de décodage D3 est la reconstruction d'une image décodée ID à partir de chaque tuile décodée TUD₁, TUD₂,...,TUDⱼ,..., TUD_{N} obtenue à l'étape de décodage D2. Plus précisément, les blocs décodés de chaque tuile décodée sont transmis à une unité URI de reconstruction d'image telle que représentée à la **figure 6****.** Au cours de cette étape D3, l'unité URI écrit les blocs décodés dans une image décodée au fur et à mesure que ces blocs deviennent disponibles.

Au cours d'une quatrième étape de décodage D4 représentée à la **figure 5A****,** une image ID entièrement décodée est délivrée par l'unité URI représentée à la **figure 6****.**

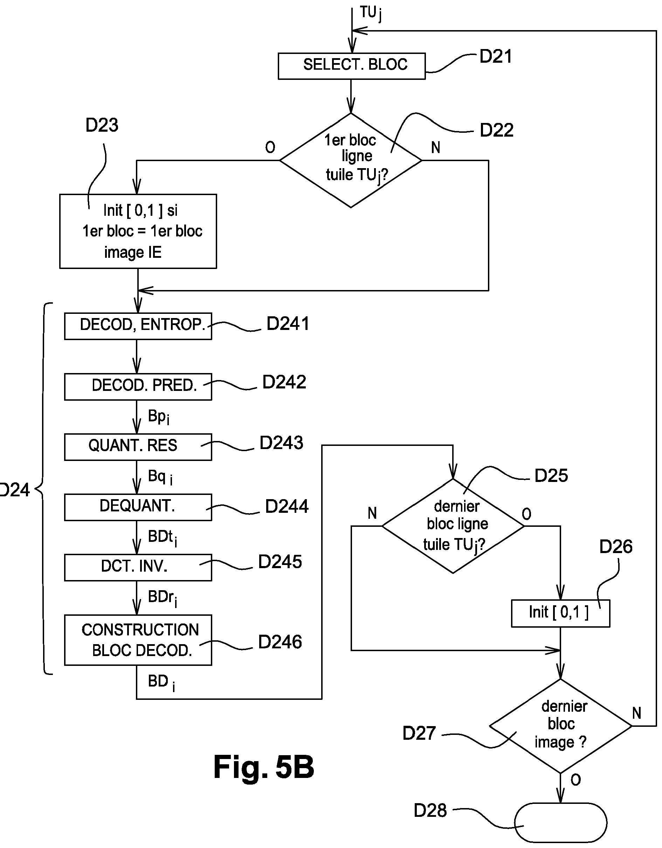

On va maintenant décrire, en référence à la **figure 5B**, les différentes sous-étapes spécifiques de l'invention, telles que mises en oeuvre lors de l'étape D2 de décodage précitée, dans l'unité de décodage UD.

Au cours d'une étape D21, l'unité de décodage UD sélectionne comme bloc courant dans le sous-flux correspondant le premier bloc à décoder d'une tuile courante TUⱼ, tel que par exemple la première tuile TU₁ de l'image IE représentée à la **figure 4****.**

Au cours d'une étape D22, l'unité de décodage UD teste si le bloc courant est le premier bloc (situé en haut et à gauche) d'une ligne de la tuile TU₁, en l'espèce le premier bloc B₁ du sous-flux SF₁.

Si tel est le cas, compte tenu du fait que le premier bloc B₁ est aussi le premier bloc de l'image IE, le module de décodage entropique MDE procède, au cours d'une étape D23, à une initialisation de ses variables d'état. Selon l'exemple représenté, il s'agit d'une initialisation d'un intervalle représentatif de la probabilité d'apparition d'un symbole contenu dans l'ensemble prédéterminé de symboles.

En variante, si le décodage entropique utilisé est le décodage LZW, une table de traduction de chaînes de symboles est initialisée, de sorte qu'elle contienne une et une seule fois tous les symboles possibles. L'étape D23 étant identique à l'étape de codage C33 précitée, elle ne sera pas décrite plus avant.

Au cours d'une étape D24 qui fait suite à l'étape D23 précitée, il est procédé au décodage du premier bloc courant B₁ de la première ligne de la tuile TU₁ représentée sur la **figure 4****.** Une telle étape D24 comprend une pluralité de sous-étapes D241 à D246 qui vont être décrites ci-dessous.

Au cours d'une première sous-étape D241, il est procédé au décodage entropique des éléments de syntaxe liés au bloc courant par lecture du flux F à l'aide d'un pointeur de flux P. Une telle étape consiste principalement à :
- lire les bits contenus au début du sous-flux SF₁ associé au premier bloc codé B₁,
- reconstruire les symboles à partir des bits lus.

Dans la variante précitée selon laquelle le décodage utilisé est un décodage LZW, une information numérique correspondant au code du symbole dans la table de traduction courante est lue, le symbole est reconstruit à partir du code lu et une mise à jour de la table de traduction est effectuée, selon une méthode connue en soi.

Plus précisément, les éléments de syntaxe liés au bloc courant sont décodés par le module MDE de décodage entropique CABAC tel que représenté à la **figure 6****.** Ce dernier décode une première portion du sous-flux de bits SF₁ du fichier compressé pour produire les éléments de syntaxe, et, en même temps, remet à jour ses probabilités de façon à ce que, au moment où celui-ci décode un symbole, les probabilités d'apparition de ce symbole soient identiques à celles obtenues lors du codage de ce même symbole lors de l'étape de codage entropique précitée C345.

Au cours d'une sous-étape suivante D242, il est procédé au décodage prédictif du bloc courant B₁ par des techniques connues de prédiction intra et/ou inter, au cours duquel le bloc B₁ est prédit par rapport à au moins un bloc précédemment décodé.

Il va de soi que d'autres modes de prédiction intra tels que proposés dans la norme H.264 sont possibles.

Au cours de cette étape, le décodage prédictif est effectué à l'aide des éléments de syntaxe décodés à l'étape précédente et comprenant notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter.

Ladite étape de décodage prédictif précitée permet de construire un bloc prédit Bp₁.

Au cours d'une sous-étape suivante D243, il est procédé à la construction d'un bloc résidu quantifié Bq₁ à l'aide des éléments de syntaxe décodés précédemment.

Au cours d'une sous-étape suivante D244, il est procédé à la déquantification du bloc résidu quantifié Bq₁ selon une opération classique de déquantification qui est l'opération inverse de la quantification effectuée à l'étape C344 précitée, pour produire un bloc déquantifié décodé BDt₁.

Au cours d'une sous-étape suivante D245, il est procédé à la transformation inverse du bloc déquantifié BDt₁ qui est l'opération inverse de la transformation directe effectuée à l'étape C343 ci-dessus. Un bloc résidu décodé BDr₁ est alors obtenu.

Au cours d'une sous-étape suivante D246, il est procédé à la construction du bloc décodé BD₁ en ajoutant au bloc prédit Bp₁ le bloc résidu décodé BDr₁. Le bloc décodé BD₁ est ainsi rendu disponible pour être utilisé par l'unité de décodage UD.

A l'issue de l'étape de décodage D246 précitée, le module de décodage entropique MDE tel que représenté à la **figure 6** contient toutes les probabilités telles que progressivement remises à jour au fur et à mesure du décodage du premier bloc. Ces probabilités correspondent aux différents éléments de syntaxe possibles et aux différents contextes de décodage associés.

L'étape de décodage D24 est par ailleurs directement mise en oeuvre si à l'issue de l'étape D22 précitée, le bloc courant n'est pas le premier bloc d'une ligne de la tuile TU₁.

Au cours d'une étape suivante D25, l'unité de décodage UD teste si le bloc courant décodé est identifié comme étant le dernier bloc d'une ligne de la tuile TU₁.

Si le bloc courant décodé est le dernier bloc d'une ligne de la tuile TU₁, par exemple le bloc B₃ représenté sur la **figure 4****,** l'unité de décodage UD de la **figure 6** effectue, au cours d'une étape D26, une étape identique à l'étape D23 précitée, c'est-à-dire initialise à nouveau l'intervalle représentatif de la probabilité d'apparition d'un symbole contenu dans l'ensemble prédéterminé de symboles.

Au cours d'une étape suivante D27, l'unité de décodage UD teste si le bloc courant qui vient d'être décodé est le dernier bloc de l'image IE, c'est-à-dire le dernier bloc du dernier sous-flux, le sous-flux SF₃ dans l'exemple représenté sur la **figure 4****.**

Une telle étape D27 est également mise en oeuvre dans le cas où le bloc courant qui a été décodé à l'issue de l'étape D24 précitée n'est pas le dernier bloc d'une ligne de la tuile courante suite à l'étape de test D25.

Si le bloc courant décodé est effectivement le dernier bloc décodé de l'image IE, au cours d'une étape D28, il est mis fin au procédé de décodage.

Si tel n'est pas le cas, il est procédé à la sélection du bloc suivant à décoder conformément à l'ordre de parcours « raster scan » dans la tuile TU₁ et les étapes D21 et suivantes sont réitérées. Dans l'exemple représenté sur la **figure 4****,** il s'agit du bloc B₂ contenu dans le sous-flux SF₁.

L'intérêt de l'étape d'initialisation D26 précitée réside dans le fait que l'unité de décodage UD se trouve dans un état initialisé à chaque fois que le pointeur P du flux F de la **figure 4** se trouve dans une portion de sous-flux SF₁, SF₂ ou SF₃ qui correspond aux données d'un premier bloc codé d'une ligne de tuile associée au sous-flux considéré, en vue de décoder cette ligne.

Une telle disposition est particulièrement adaptée au cas où un décodage ligne de blocs par ligne de blocs de l'image IE serait souhaité, notamment dans le cadre de l'affichage de l'image sur un écran de visualisation fonctionnant généralement selon un balayage horizontal des lignes de pixels.

L'unité de décodage UD serait ainsi capable de déplacer le pointeur P au début du sous-flux SF₂ pour commencer à lire la première portion de sous-flux SF₂ correspondant respectivement à la première ligne de blocs codés B₁₆ à B₁₇ de la deuxième tuile TU₂ et pour décoder les blocs de cette ligne conformément au procédé de décodage ci-dessus. Une fois le décodage de ces blocs effectué, l'unité de décodage UD se trouverait alors dans un état initialisé en vue de traiter la prochaine ligne de blocs B₁₈ à B₁₉. L'unité de décodage UD serait ainsi capable de déplacer le pointeur P au début du sous-flux SF₃ pour commencer à lire la première portion de sous-flux SF₃ correspondant respectivement à la première ligne de blocs codés B₂₆ à B₂₈ de la troisième tuile TU₃ et pour décoder les blocs de cette ligne conformément au procédé de décodage ci-dessus. Une fois le décodage de ces blocs effectué, l'unité de décodage UD se trouverait alors dans un état initialisé en vue de traiter la prochaine ligne de blocs B₂₉ à B₃₁.

Une telle procédure serait alors réitérée pour chaque ligne de blocs de l'image IE.

Par ailleurs, compte tenu du fait que l'unité de décodage est réinitialisée à chaque fois qu'un bloc décodé longe une frontière entre la tuile en cours de décodage et la tuile qui la suit dans l'ordre « raster scan », il n'est pas nécessaire, en vue de reprendre le décodage de la deuxième ligne de blocs de ladite tuile, une fois décodés les blocs de la première ligne de la tuile suivante :
- de mémoriser au préalable les bits qui ont été mutualisés au cours du décodage de la première ligne de blocs de ladite tuile, en vue de servir au décodage des blocs qui suivent le dernier bloc de la première ligne de ladite tuile dans l'ordre « raster scan »,
- de transférer les bits mutualisés dans la mémoire courante du décodeur entropique lors de la reprise du décodage de la deuxième ligne de blocs de la tuile.

## Revendications

1. Procédé de décodage d'un flux (F) représentatif d'au moins une image codée constituée d'au moins deux tuiles, une tuile étant constituée d'une pluralité de blocs d'au moins deux lignes de l'image à décoder (TU₁, TU₂,..., TUⱼ,...TU_{N}) voisins deux à deux ayant été regroupés puis codés consécutivement, lesdits blocs étant aptes à contenir des symboles appartenant à un ensemble prédéterminé de symboles, lesdites au moins deux tuiles étant séparées par une frontière verticale, comprenant les étapes de :
- identification (D1), dans ledit flux, d'au moins deux sous-flux de données (SF₁, SF₂, ..., SFⱼ, ..., SF_{N}) correspondant respectivement auxdites au moins deux tuiles, une tuile étant associée à un sous-flux,
- décodage desdites au moins deux tuiles de blocs au moyen d'un module de décodage entropique, par lecture, dans lesdits sous-flux identifiés, d'informations numériques associées aux symboles de chaque bloc de la tuile correspondante, ladite étape de décodage comprenant, pour le premier bloc à décoder de l'image, une sous-étape (D23) d'initialisation de variables d'état dudit module de décodage entropique,
ledit procédé de décodage étant **caractérisé en ce qu'**il comporte les étapes suivantes lors du décodage des blocs d'une ligne de l'image, à chaque frontière verticale :
- dans le cas (D25, O) où le bloc courant de ladite ligne est un bloc préalablement décodé et identifié comme étant le dernier bloc d'une ligne d'une desdites tuiles, il comporte en outre :
- une étape de réinitialisation (D26) des variables d'état dudit module de codage entropique, et
- une étape de mémorisation d'une position du pointeur de lecture dudit sous-flux associé à ladite tuile dans une mémoire ;
- dans le cas (D23, O) où le bloc courant de ladite ligne est un bloc identifié comme étant le premier bloc d'une ligne d'une desdites tuiles, il comporte en outre une étape de restitution (D241) d'une position du pointeur de lecture dudit sous-flux associé à ladite tuile depuis ladite mémoire.

2. Dispositif (DO) de décodage d'un flux (F) représentatif d'au moins une image codée constituée d'au moins deux tuiles, une tuile étant constituée d'une pluralité de blocs d'au moins deux lignes de l'image à décoder (TU₁, TU₂,..., TUⱼ,...TU_{N}) voisins deux à deux ayant été regroupés puis codés consécutivement, lesdits blocs étant aptes à contenir des symboles appartenant à un ensemble prédéterminé de symboles, lesdites au moins deux tuiles étant séparées par une frontière verticale, comprenant :
- des moyens (EXDO) d'identification dans ledit flux d'un nombre prédéterminé d'au moins deux sous-flux de données (SF₁, SF₂, ..., SFⱼ, ..., SF_{N}) correspondant respectivement auxdites au moins deux tuiles, une tuile étant associée à un sous-flux,
- des moyens (UD) de décodage desdites au moins deux tuiles de blocs, lesdits moyens de décodage comprenant un module de décodage entropique apte à lire, dans lesdits sous-flux identifiés, des informations numériques associées aux symboles de chaque bloc de ladite tuile correspondant audit au moins un sous-flux identifié, lesdits moyens de décodage comprenant, pour le premier bloc à décoder de l'image, des sous-moyens d'initialisation de variables d'état dudit module de décodage entropique,
ledit dispositif de décodage étant **caractérisé en ce que** lors du décodage des blocs d'une ligne de l'image, à chaque frontière verticale :
- dans le cas où le bloc courant de ladite ligne est un bloc préalablement décodé et identifié comme étant le dernier bloc d'une ligne d'une desdites tuiles :
- lesdits sous-moyens d'initialisation sont activés pour réinitialiser les variables d'état dudit module de décodage entropique, et
- une position du pointeur de lecture dudit sous-flux associé à ladite tuile est mémorisée dans une mémoire ;
- dans le cas où le bloc courant de ladite ligne est un bloc identifié comme étant le premier bloc d'une ligne d'une desdites tuiles, une position du pointeur de lecture dudit sous-flux associé à ladite tuile est restituée depuis ladite mémoire.

3. Programme d'ordinateur comportant des instructions pour mettre en oeuvre le procédé de décodage selon la revendication 1, lorsqu'il est exécuté sur un ordinateur.

4. Support d'enregistrement lisible par un ordinateur sur lequel est enregistré un programme d'ordinateur comprenant des instructions pour l'exécution des étapes du procédé de décodage selon la revendication 1, lorsque ledit programme est exécuté par un ordinateur.

## Patentansprüche

1. Verfahren zum Decodieren eines Stroms (F), der für mindestens ein codiertes Bild repräsentativ ist, das aus mindestens zwei Kacheln besteht, wobei eine Kachel aus einer Mehrzahl von Blöcken aus mindestens zwei paarweise benachbarten Zeilen des zu decodierenden Bildes (TU₁, TU₂,..., TUⱼ,...TU_{N}) besteht, die gruppiert und dann nacheinander codiert worden sind, wobei die Blöcke geeignet sind, Symbole zu enthalten, die zu einer vorbestimmten Gruppe von Symbolen gehören, wobei die mindestens zwei Kacheln durch eine vertikale Grenze getrennt sind, umfassend die folgenden Schritte:
- Identifizieren (D1), in dem Strom, von mindestens zwei Datenteilströmen (SF₁, SF₂, ..., SFⱼ, ..., SF_{N}), die jeweils den mindestens zwei Kacheln entsprechen, wobei eine Kachel einem Teilstrom zugeordnet ist,
- Decodieren der mindestens zwei Kacheln aus Blöcken mittels eines Entropiedecodierungsmoduls durch Lesen, in den identifizierten Teilströmen, von digitalen Informationen, die den Symbolen jedes Blocks der entsprechenden Kachel zugeordnet sind, wobei der Schritt des Decodierens, für den ersten zu decodierenden Block des Bildes, einen Teilschritt (D23) des Initialisierens von Statusvariablen des Entropiedecodierungsmoduls umfasst,
wobei das Verfahren zum Decodieren **dadurch gekennzeichnet ist, dass** es beim Decodieren der Blöcke einer Zeile des Bildes an jeder vertikalen Grenze die folgenden Schritte beinhaltet:
- in dem Fall (D25, O), in dem der aktuelle Block der Zeile ein Block ist, der zuvor decodiert und als der letzte Block einer Zeile einer der Kacheln identifiziert wurde, beinhaltet es ferner:
- einen Schritt des Reinitialisierens (D26) der Statusvariablen des Entropiecodierungsmoduls und
- einen Schritt des Speicherns einer Position des Lesezeigers des der Kachel zugeordneten Teilstroms in einem Speicher;
- in dem Fall (D23, O), in dem der aktuelle Block der Zeile ein Block ist, der als der erste Block einer Zeile einer der Kacheln identifiziert wurde, beinhaltet es ferner einen Schritt des Ausgebens (D241) einer Position des Lesezeigers des der Kachel zugeordneten Teilstroms aus dem Speicher.

2. Vorrichtung (DO) zum Decodieren eines Stroms (F), der für mindestens ein codiertes Bild repräsentativ ist, das aus mindestens zwei Kacheln besteht, wobei eine Kachel aus einer Mehrzahl von Blöcken aus mindestens zwei paarweise benachbarten Zeilen des zu decodierenden Bildes (TU₁, TU₂,..., TUⱼ,...TU_{N}) besteht, die gruppiert und dann nacheinander codiert worden sind, wobei die Blöcke geeignet sind, Symbole zu enthalten, die zu einer vorbestimmten Gruppe von Symbolen gehören, wobei die mindestens zwei Kacheln durch eine vertikale Grenze getrennt sind, umfassend:
- Mittel (EXDO) zum Identifizieren, in dem Strom, einer vorbestimmten Anzahl von mindestens zwei Datenteilströmen (SF₁, SF₂, ..., SFⱼ, ..., SF_{N}), die jeweils den mindestens zwei Kacheln entsprechen, wobei eine Kachel einem Teilstrom zugeordnet ist,
- Mittel (UD) zum Decodieren der mindestens zwei Kacheln aus Blöcken, wobei die Mittel zum Decodieren ein Entropiedecodierungsmodul umfassen, das geeignet ist, in den identifizierten Teilströmen digitale Informationen zu lesen, die den Symbolen jedes Blocks der Kachel zugeordnet sind, die dem mindestens einen identifizierten Teilstrom entspricht, wobei die Mittel zum Decodieren, für den ersten zu decodierenden Block des Bildes, Teilmittel zum Initialisieren von Statusvariablen des Entropiedecodierungsmoduls umfassen,
wobei die Vorrichtung zum Decodieren **dadurch gekennzeichnet ist, dass** beim Decodieren der Blöcke einer Zeile des Bildes an jeder vertikalen Grenze:
- in dem Fall, in dem der aktuelle Block der Zeile ein Block ist, der zuvor decodiert und als der letzte Block einer Zeile einer der Kacheln identifiziert wurde:
- die Teilmittel zum Initialisieren aktiviert werden, um die Statusvariablen des Entropiedecodierungsmoduls zu reinitialisieren, und
- eine Position des Lesezeigers des der Kachel zugeordneten Teilstroms in einem Speicher gespeichert wird;
- in dem Fall, in dem der aktuelle Block der Zeile ein Block ist, der als der erste Block einer Zeile einer der Kacheln identifiziert wurde, eine Position des Lesezeigers des der Kachel zugeordneten Teilstroms aus dem Speicher ausgegeben wird.

3. Computerprogramm, das Anweisungen beinhaltet, die bei seiner Ausführung auf einem Computer das Verfahren zum Decodieren nach Anspruch 1 durchführen.

4. Computerlesbares Speichermedium, auf dem ein Computerprogramm gespeichert ist, das Anweisungen zur Ausführung der Schritte des Verfahrens zum Decodieren nach Anspruch 1 beim Ausführen des Programms durch einen Computer umfasst.

## Claims

1. Method for decoding a stream (F) representative of at least one coded image made up of at least two tiles, one tile being made up of a plurality of blocks of at least two rows of the image to be decoded (TU₁, TU₂,..., TUⱼ, ...TU_{N}), which blocks are adjacent in pairs having been grouped then coded consecutively, said blocks being able to contain symbols belonging to a predetermined set of symbols, said at least two tiles being separated by a vertical boundary, comprising the steps of:
- identifying (D1), in said stream, at least two data substreams (SF₁, SF₂, ..., SFⱼ, ..., SF_{N}) respectively corresponding to said at least two tiles, one tile being associated with one substream,
- decoding said at least two tiles of blocks by means of an entropic decoding module, by reading, in said identified substreams, digital information associated with the symbols of each block of the corresponding tile, said decoding step comprising, for the first block to be decoded of the image, a substep (D23) of initializing state variables of said entropic decoding module,
said decoding method being **characterized in that** it comprises the following steps during the decoding of the blocks of a row of the image, at each vertical boundary:
- in the case (D25, O) in which the current block of said row is a block previously decoded and identified as being the last block of a row of one of said tiles, it further comprises:
- a step of reinitializing (D26) the state variables of said entropic coding module, and
- a step of storing a position of the read pointer of said substream associated with said tile in a memory;
- in the case (D23, O) in which the current block of said row is a block identified as being the first block of a row of one of said tiles, it further comprises a step of recovering (D241) a position of the read pointer of said substream associated with said tile from said memory.

2. Device (DO) for decoding a stream (F) representative of at least one coded image made up of at least two tiles, one tile being made up of a plurality of blocks of at least two rows of the image to be decoded (TU₁, TU₂,..., TUⱼ,...TU_{N}), which blocks are adjacent in pairs having been grouped then coded consecutively, said blocks being able to contain symbols belonging to a predetermined set of symbols, said at least two tiles being separated by a vertical boundary, comprising:
- means (EXDO) for identifying in said stream a predetermined number of at least two data substreams (SF₁, SF₂, ..., SFⱼ, ..., SF_{N}) respectively corresponding to said at least two tiles, one tile being associated with one substream,
- means (UD) for decoding said at least two tiles of blocks, said decoding means comprising an entropic decoding module able to read, in said identified substreams, digital information associated with the symbols of each block of said tile corresponding to said at least one identified substream, said decoding means comprising, for the first block to be decoded of the image, sub-means for initializing state variables of said entropic decoding module,
said decoding device being **characterized in that** during the decoding of the blocks of a row of the image, at each vertical boundary:
- in the case in which the current block of said row is a block previously decoded and identified as being the last block of a row of one of said tiles:
- said initialization sub-means are activated to reinitialize the state variables of said entropic decoding module, and
- a position of the read pointer of said substream associated with said tile is stored in a memory;
- in the case in which the current block of said row is a block identified as being the first block of a row of one of said tiles, a position of the read pointer of said substream associated with said tile is recovered from said memory.

3. Computer program comprising instructions for implementing the decoding method according to Claim 1 when it is executed on a computer.

4. Computer-readable storage medium on which is stored a computer program comprising instructions for executing the steps of the decoding method according to Claim 1 when said program is executed by a computer.
